# EUROPÄISCHE PATENTSCHRIFT

(11) **EP 4 507 845 B1**
(45) Veröffentlichungstag und Bekanntmachung des Hinweises auf die Patenterteilung: **06.05.2026**
(21) Anmeldenummer: 22783289.6
(22) Anmeldetag: 08.09.2022
(51) Int. Cl.: B23K 11/06, B08B 1/20, B21C 43/04, B23K 11/30

(54) **VERFAHREN UND VORRICHTUNG ZUR REINIGUNG DER OBERFLÄCHE EINES METALLDRAHTES ODER METALLBANDES**
METHOD AND DEVICE FOR CLEANING THE SURFACE OF A METAL WIRE OR METAL STRIP
PROCEDE ET DISPOSITIF DE NETTOYAGE DE LA SURFACE D'UN FIL METALLIQUE OU D'UNE BANDE METALLIQUE

(43) Veröffentlichungstag der Anmeldung: 19.02.2025
(73) Patentinhaber: Soudronic AG, 8962 Bergdietikon (CH)
(72) Erfinder: TAIANA, Peter, 8967 Widen (CH); UMBRICHT, Ruedi, 5707 Seengen (CH)
(74) Vertreter: E. Blum & Co. AG
(86) Internationale Anmeldenummer: PCT/EP2022/075011
(87) Internationale Veröffentlichungsnummer: WO 2024/051944

(56) Entgegenhaltungen:
- EP-B1- 0 019 196
- DE-A1- 102012 017 171

## Beschreibung

### Technisches Gebiet

Die Erfindung betrifft ein Verfahren zur Reinigung der Oberfläche eines Metalldrahtes oder Metallbandes, eine Vorrichtung zur Reinigung der Oberfläche eines Metalldrahtes oder Metallbandes sowie eine Verwendung der Vorrichtung gemäss den Oberbegriffen der unabhängigen Patentansprüche.

### Stand der Technik

In Widerstands-Rollnahtschweissmaschinen für Weissblech-Verpackungen, wie z.B. Konservendosen für Lebensmittel, dient ein Kupferdraht als Zwischenelektrode zum Sauberhalten der Elektrodenrollen, indem er das während beim Schweissen vom Weissblech abgegebene Zinn aufnimmt und abführt. Um einen guten elektrischen Kontakt zwischen Draht und Elektrodenrolle zu gewährleisten ist es wichtig, dass der Draht dabei frei von Staub und Verunreinigungen ist. Aus Kostengründen wird der Draht bei derartigen Widerstands-Rollnahtschweissmaschinen zweimal verwendet, nämlich einmal für die erste Elektrodenrolle und ein weiteres Mal für die zweite Elektrodenrolle.

Da der Draht bereits im Lieferzustand gewisse Verunreinigungen, wie z.B. Kupferoxid, aufweist und beim Flachprofilieren desselben für den Einsatz als Zwischenelektrode Kupferstaub entsteht, ist es sinnvoll, den Draht bereits vor der ersten Verwendung zu reinigen, in jedem Fall aber vor der zweiten Verwendung. Dies besonders bei hochverzinnten Weissblechen (5 bis 12 g/m2), wie es bei gewissen Gemüse- und Früchtedosen gefordert wird.

Gemäss dem Stand der Technik wird der Draht zwischen zwei bürstenbesetzten Scheiben hindurchgezogen und dadurch gereinigt. Diese Scheiben haben eine unbefriedigende und nicht konstante Reinigungswirkung und verschleissen schnell. Auch müssen sie regelmässig von dem sich darin ablagernden Kupferstaub befreit werden. Zudem ist eine Kühlung des Drahtes, welche nach dem Flachprofilieren bzw. der ersten Verwendung des Drahtes wünschenswert wäre, mit den bürstenbesetzten Scheiben kaum möglich.

Das Dokument DE 10 2012 017 171 A1, welches die Grundlage für den Oberbegriff der unabhängigen Ansprüche bildet, offenbart eine Drahtreinigungseinrichtung, bei welcher der Draht durch ein Gehäuse geführt wird, in welchem in Drahtlaufrichtung gesehen hintereinander an verschiedenen Umfangspositionen Reinigungsbürsten auf den Draht einwirken. Hier ergeben sich in der Praxis ähnliche Probleme wie bereits zuvor beschrieben.

Aus CH 691 668 A5 ist eine Vorrichtung zur Reinigung von bandförmigem Kupferdraht bekannt, bei welcher der Draht über eine Führungsrolle mit einer Führungsnut geführt wird und die aussenliegende Oberfläche des Drahtes dabei mit der Schneidkante einer rotierenden Messerscheibe in Kontakt steht. Diese Vorrichtung weist den Nachteil auf, dass lediglich eine punktuelle Berührung mit zwischen der Drahtoberfläche und der Schneidkante der Messerscheibe vorliegt, wodurch eine gründliche Reinigung von vornherein nicht möglich ist. Ein weiterer Nachteil besteht darin, dass das vom Draht abgestreifte Material unkontrolliert in die Umgebung der Vorrichtung eintritt. Noch ein weiterer Nachteil dieser Vorrichtung besteht darin, dass ein Auflegen des Drahtes auf die Führungsrolle erst nach einem Entfernen bzw. Wegschwenken der Messerscheibe möglich ist.

### Darstellung der Erfindung

Es stellt sich daher die Aufgabe technische Lösungen zur Verfügung zu stellen, welche die Nachteile des Standes der Technik zumindest teilweise vermeiden.

Diese Aufgabe wird durch die Gegenstände der unabhängigen Patentansprüche gelöst.

Gemäss diesen betrifft ein erster Aspekt der Erfindung ein Verfahren zur Reinigung der Oberfläche eines Metalldrahtes oder Metallbandes. Bevorzugterweise handelt es sich um ein Verfahren zur Reinigung der Oberfläche eines als Zwischenelektrode einer Rollnahtschweissmaschine verwendeten Metalldrahtes oder Metallbandes.

Erfindungsgemäss wird dabei der Metalldraht oder das Metallband unter Zugspannung in Draht- bzw. Bandlängsrichtung an mehreren in Draht- bzw. Bandlängsrichtung mit einem Abstand hintereinander angeordneten Abstreifkörpern entlanggeführt, derart, dass die jeweils zwischen zwei aufeinander folgenden Abstreifkörper liegenden Draht- oder Bandabschnitte zusammen einen bogenförmigen Drahtabschnitt, insbesondere mit der Form eines bogenförmigen Polygonzuges, bilden..

Es hat sich gezeigt, dass hierdurch eine intensive und zuverlässige Reinigung mit konstanter Reinigungsqualität möglich wird.

Bevorzugterweise werden dabei die Abstreifkörper frei zugänglich an einer Aussenseite eines gemeinsamen Trägerkörpers bereitgestellt, derart, dass der Metalldraht oder das Metallband von Hand auf die Abstreifkörper aufgelegt werden kann, und bevorzugterweise zusätzlich derart, dass dafür keinerlei Werkzeuge benötigt werden oder Bauteile bewegt oder demontiert werden müssen. Hierdurch wird ein einfaches und unkompliziertes Handling bei Wartungsarbeiten möglich.

In einer bevorzugten Variante der zuvor beschriebenen Ausführungsform des Verfahrens wird ein Trägerkörper verwendet, welcher einen Innenraum aufweist und bei welchem die Abstände zwischen den Abstreifkörpern Durchtritte bilden, über welche der Innenraum mit der Umgebung des Trägerkörpers verbunden ist. Während dem Entlangführen des Metalldrahtes oder Metallbandes an den Abstreifkörpern zwecks Reinigung der Oberfläche des Metalldrahtes oder Metallbandes wird bei dieser Verfahrensvariante der Innenraum mit Unterdruck beaufschlagt, wodurch die an den Abstreifkörpern abgestreiften Verunreinigungen über den Innenraum des Trägerkörpers abgesaugt werden. Entsprechend wird es mit dieser Variante möglich, das vom Draht abgestreifte Material kontrolliert abzuführen. Auch erfolgt eine Kühlung des Drahtes durch den an diesem vorbeistreichenden eingesauten Luftstrom.

Dabei ist es von Vorteil, dass die Durchtritte in Draht- bzw. Bandlängsrichtung gesehen eine Breite aufweisen, welche mindestens der doppelten Breite des Metalldrahtes oder Metallbandes entsprechen. Hierdurch kann sichergestellt werden, dass zwischen dem Draht und den Begrenzungen der Durchtritte ausreichend grosse Einströmöffnungen gebildet werden, um eine Luftströmung zu erzeugen die geeignet ist, das vom Draht abgestreifte Material abzutransportieren.

In einer weiteren bevorzugten Ausführungsform des Verfahrens werden in Draht- bzw. Bandlängsrichtung gesehen vor und nach den mit einem Abstand hintereinander angeordneten Abstreifkörpern Führungselemente angeordnet, und zwar bevorzugterweise Führungsstifte, mittels welchen der Metalldraht oder das Metallband quer zu seiner Auflagerichtung auf den Abstreifkörpern derartig geführt wird, dass der Metalldraht oder das Metallband über die Abstreifkörper geführt wird ohne seitlich anzulaufen.

Bei Verfahrensvarianten, bei denen ein die Abstreifkörper tragender Trägerkörper verwendet wird, ist es bevorzugt, dass die Führungselemente im Trägerkörper bereitgestellt werden. Hierdurch können sie auf einfache Weise in unmittelbarer Nähe der Abstreifkörper bereitgestellt werden.

In noch einer weiteren bevorzugten Ausführungsform des erfindungsgemässen Verfahrens sind die verwendeten Abstreifkörper derartig ausgebildet und wird der Metalldraht oder das Metallband derartig an den Abstreifkörpern vorbeigeführt, dass der Metalldraht oder das Metallband bei jedem Abstreifkörper zuerst eine Abstreifkante passiert, zum Abstreifen von Verunreinigungen von seiner Oberfläche, und sodann entlang einer Kontaktfläche des Abstreifkörpers geführt wird, zum Kühlen des Metalldrahtes oder Metallbandes mit dem Abstreifkörper. Hierdurch kann der Draht während dem Vorbeiführen an den Abstreifkörpern nicht nur gereinigt werden, sondern mit den Abstreifkörpern zusätzlich auch aktiv gekühlt werden.

Mit Vorteil werden bei dem Verfahren keramische Abstreifkörper verwendet oder Abstreifkörper aus Hartmetall. Derartige Abstreifkörper können kostengünstig beschafft werden, z.B. in Form von Schneidplatten für die zerspanende Bearbeitung von Metall, und weisen eine hohe Standzeit auf.

Der Metalldraht oder das Metallband, welcher oder welches gemäss dem erfindungsgemässen Verfahren gereinigt wird, besteht bevorzugterweise aus Kupfer oder aus einer Kupferlegierung.

In noch einer weiteren bevorzugten Ausführungsform des Verfahrens wird in einem ersten Schritt ein im Wesentlichen runder Metalldraht Flachprofiliert, so dass er im Querschnitt gesehen zwei parallele flache Seiten aufweist. Direkt nach dem Flachprofilieren wird der Draht sodann in einem zweiten Schritt zuerst mit einer ersten der beiden flachen Seiten unter Zugspannung in Draht- bzw. Bandlängsrichtung an mehreren ersten in Draht- bzw. Bandlängsrichtung mit einem Abstand hintereinander angeordneten Abstreifkörpern entlanggeführt, derart, dass die jeweils zwischen zwei aufeinander folgenden ersten Abstreifkörpern liegenden Draht- oder Bandabschnitte zusammen einen bogenförmigen Drahtabschnitt, insbesondere mit der Form eines bogenförmigen Polygonzuges, bilden. Direkt im Anschluss daran wird der Draht mit der anderen der beiden flachen Seiten unter Zugspannung in Draht- bzw. Bandlängsrichtung an mehreren zweiten in Draht- bzw. Bandlängsrichtung mit einem Abstand hintereinander angeordneten Abstreifkörpern entlanggeführt, derart, dass die jeweils zwischen zwei aufeinander folgenden zweiten Abstreifkörper liegenden Draht- oder Bandabschnitte zusammen einen bogenförmigen Drahtabschnitt, insbesondere mit der Form eines bogenförmigen Polygonzuges, bilden.

Dieses Verfahren eignet sich besonders gut zur Bereitstellung und Reinigung vor der Verwendung eines als Zwischenelektrode für Rollnahtschweissmaschinen zu verwendenden Kupferdrahtes.

Ein zweiter Aspekt der Erfindung betrifft eine Vorrichtung zur Reinigung der Oberfläche eines Metalldrahtes oder Metallbandes, und zwar bevorzugterweise eines als Zwischenelektrode einer Rollnahtschweissmaschine verwendeten bzw. zu verwendenden Metalldrahtes oder Metallbandes, wobei die Reinigung bevorzugterweise nach dem Verfahren gemäss dem ersten Aspekt der Erfindung erfolgen kann.

Die Vorrichtung umfasst einen Trägerkörper mit mehreren Abstreifkörpern, welche mit einem Abstand hintereinander angeordnet sind derart, dass ein zu reinigender Metalldraht oder ein zu reinigendes Metallband unter Zugspannung in Draht- bzw. Bandlängsrichtung an den Abstreifkörpern entlanggeführt werden kann und die jeweils zwischen zwei aufeinander folgenden Abstreifkörpern liegenden Draht- oder Bandabschnitte dabei zusammen einen bogenförmigen Drahtabschnitt, insbesondere mit der Form eines bogenförmigen Polygonzuges, bilden.

Es hat sich gezeigt, dass mit einer derartigen Vorrichtung eine intensive und zuverlässige Reinigung mit konstanter Reinigungsqualität möglich wird.

Bevorzugterweise sind dabei die Abstreifkörper frei zugänglich an einer Aussenseite des gemeinsamen Trägerkörpers bereitgestellt, derart, dass der Metalldraht oder das Metallband von Hand auf die Abstreifkörper aufgelegt werden kann, und bevorzugterweise zusätzlich derart, dass dafür keinerlei Werkzeuge benötigt werden oder Bauteile bewegt oder demontiert werden müssen. Hierdurch wird ein einfaches und unkompliziertes Handling bei Wartungsarbeiten möglich.

In einer bevorzugten Variante der zuvor beschriebenen Ausführungsform der Vorrichtung weist der Trägerkörper einen Innenraum auf und bilden die Abstände zwischen den Abstreifkörpern Durchtritte, über welche der Innenraum mit der Umgebung des Trägerkörpers verbunden ist. Während dem Entlangführen des Metalldrahtes oder Metallbandes an den Abstreifkörpern zwecks Reinigung der Oberfläche des Metalldrahtes oder Metallbandes ist der Innenraum mit Unterdruck beaufschlagbar, so dass die an den Abstreifkörpern abgestreiften Verunreinigungen über den Innenraum des Trägerkörpers abgesaugt werden können. Entsprechend wird es mit dieser Variante möglich, das vom Draht abgestreifte Material kontrolliert abzuführen. Auch kann eine Kühlung des Drahtes durch den an diesem vorbeistreichenden eingesauten Luftstrom erfolgen.

In einer weiteren bevorzugten Ausführungsform der Vorrichtung sind in Draht- bzw. Bandlängsrichtung gesehen vor und nach den mit einem Abstand hintereinander angeordneten Abstreifkörpern Führungselemente angeordnet, und zwar bevorzugterweise Führungsstifte, mittels welchen der Metalldraht oder das Metallband quer zu seiner Auflagerichtung auf den Abstreifkörpern geführt werden kann, insbesondere derartig, dass der Metalldraht oder das Metallband im Wesentlichen mittig über die Abstreifkörper geführt wird. Hierdurch kann sichergestellt werden, dass der Draht die Abstreifkörper an den dafür vorgesehenen Stellen berührt und es kann im Falle der zuvor erwähnten Ausführungsform der Vorrichtung zudem bewirkt werden, dass zu beiden Seiten des Drahtes im Wesentlichen gleich breite Einströmöffnungen gebildet werden, um eine Luftströmung zu erzeugen die geeignet ist, das vom Draht abgestreifte Material abzutransportieren und den Draht zu kühlen.

Dabei ist es bevorzugt, dass die Führungselemente im Trägerkörper bereitgestellt sind. Hierdurch sind sie auf einfache Weise in unmittelbarer Nähe der Abstreifkörper angeordnet.

In noch einer weiteren bevorzugten Ausführungsform der Vorrichtung sind die Abstreifkörper derartig ausgebildet und kann der Metalldraht oder das Metallband derartig an den Abstreifkörpern vorbeigeführt werden, dass der Metalldraht oder das Metallband bei jedem Abstreifkörper zuerst eine Abstreifkante passiert, zum Abstreifen von Verunreinigungen von seiner Oberfläche, und sodann entlang einer Kontaktfläche des Abstreifkörpers geführt wird, zum Kühlen des Metalldrahtes oder Metallbandes mit dem Abstreifkörper. Hierdurch kann der Draht während dem Vorbeiführen an den Abstreifkörpern nicht nur gereinigt werden, sondern mit den Abstreifkörpern zusätzlich auch aktiv gekühlt werden.

Die Abstreifkörper der erfindungsgemässen Vorrichtung sind bevorzugterweise aus Hartmetall oder Keramik. Derartige Abstreifkörper können kostengünstig beschafft werden, z.B. in Form von Schneidplatten für die zerspanende Bearbeitung von Metall, und weisen eine hohe Standzeit auf.

Ein dritter Aspekt der Erfindung betrifft die Verwendung der Vorrichtung gemäss dem zweiten Aspekt der Erfindung zum Reinigen eines Metalldrahts oder eines Metallbands aus Kupfer oder einer Kupferlegierung. Bei derartigen Verwendungen treten die Vorteile der Erfindung besonders deutlich zu Tage.

### Kurze Darstellung der Zeichnungen

Weitere Vorteile und Anwendungen der Erfindung ergeben sich aus der nun folgenden Beschreibung anhand der Figuren. Dabei zeigen:
Fig. 1 eine perspektivische Darstellung einer erfindungsgemässen Vorrichtung zur Reinigung der Oberfläche eines Kupferdrahtes;
Fig. 2 einen Längsschnitt durch die Vorrichtung aus Fig. 1;
Fig. 3 das Detail X aus Fig. 2; und
Fig. 4 eine schematische Darstellung eines erfindungsgemässen Verfahrens unter Verwendung der Vorrichtung aus Fig. 1.

### Wege zur Ausführung der Erfindung

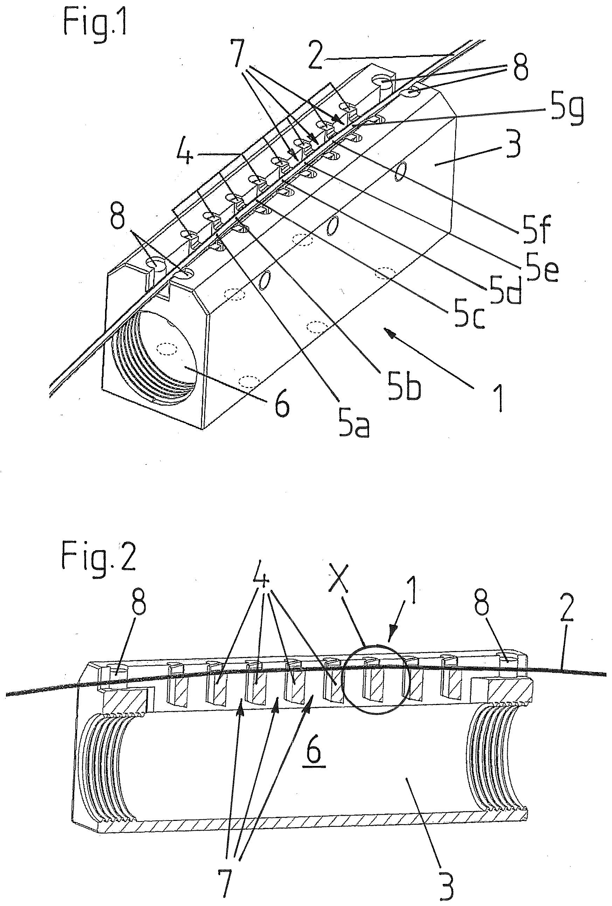

Fig. 1 zeigt eine perspektivische Darstellung einer erfindungsgemässen Vorrichtung 1 zur Reinigung der Oberfläche eines als Zwischenelektrode einer Rollnahtschweissmaschine verwendeten Metalldrahtes 2 aus Kupfer. Fig. 2 zeigt einen Längsschnitt durch die Vorrichtung aus Fig. 1

Wie aus einer Zusammenschau der Figuren 1 und 2 zu erkennen ist, umfasst die Vorrichtung 1 einen Trägerkörper 3 aus Aluminium oder Messing mit mehreren Abstreifkörpern 4 aus Hartmetall, welche mit einem Abstand hintereinander angeordnet sind derart, dass der zu reinigende Kupferdraht 2 unter Zugspannung in Drahtlängsrichtung an den Abstreifkörpern 4 entlanggeführt werden kann und die jeweils zwischen zwei aufeinander folgenden Abstreifkörpern liegenden Draht- oder Bandabschnitte 5a-5g (aus Gründen der Übersichtlichkeit nur in Fig. 1 mit Bezugsziffern versehen) dabei zusammen einen bogenförmigen Drahtabschnitt bilden der die Form eines bogenförmigen Polygonzuges aufweist.

Die Abstreifkörper 4 sind frei zugänglich an einer Aussenseite des Trägerkörpers 3 bereitgestellt, so dass der zu reinigende Kupferdraht 2 von Hand und ohne Verwendung von Werkzeugen auf die Abstreifkörper 4 aufgelegt werden kann.

Der Trägerkörper 3 weist einen Innenraum 6 auf und die Abstände zwischen den Abstreifkörpern 4 bilden Durchtritte 7, über welche der Innenraum 6 mit der Umgebung des Trägerkörpers 3 verbunden ist. Dabei weisen die Durchtritte 7 in Drahtlängsrichtung gesehen eine Breite auf, welche mindestens der doppelten Breite des Drahtes 2 entsprechen. Der Innenraum 6 des Trägerkörpers 3 kann während einem Entlangführen des Kupferdrahtes 2 an den Abstreifkörpern 4 zwecks Reinigung der Oberfläche des Drahtes 2 mit Unterdruck (Vakuum) beaufschlagt werden, zum Absaugen der an den Abstreifkörpern 4 abgestreiften Verunreinigungen über den Innenraum 6 des Trägerkörpers 3.

Wie weiter zu erkennen ist, sind im Trägerkörper 3 in Drahtlängsrichtung gesehen vor und nach den mit einem Abstand hintereinander angeordneten Abstreifkörpern 4 Führungsstifte 8 angeordnet sind, mittels welchen der Kupferdraht 2 quer zu seiner Auflagerichtung auf den Abstreifkörpern 4 geführt wird derart, dass er über die Abstreifkörper 4 verläuft ohne seitlich anzulaufen.

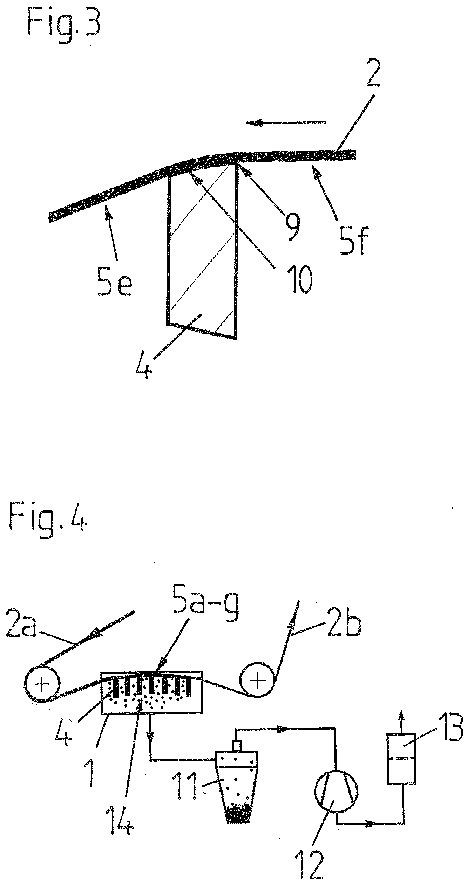

Wie in Zusammenschau mit Fig. 3 ersichtlich ist, welche das Detail X aus Fig. 2 zeigt, sind die Abstreifkörper 4 derartig ausgebildet und wird der Kupferdraht 2 derartig an den Abstreifkörpern 4 vorbeigeführt, dass der Draht 2 bei jedem Abstreifkörper 4 zuerst eine Abstreifkante 9 passiert, zum Abstreifen von Verunreinigungen von seiner Oberfläche, und sodann entlang einer Kontaktfläche 10 des Abstreifkörpers 4 geführt wird, zum aktiven Kühlen des Drahtes 2 mit dem jeweiligen Abstreifkörper 4. Zu beachten ist, dass hier die Umlenkung des Drahtes 2 durch den Abstreifkörper 4 zwecks Illustration des beschriebenen Sachverhalts übertrieben dargestellt ist.

Fig. 4 zeigt eine schematische Darstellung eines erfindungsgemässen Verfahrens unter Verwendung der Vorrichtung aus Fig. 1, wobei ein durch seine Verwendung als Zwischenelektrode bei der ersten Elektrodenrolle einer Rollnahtschweissmaschine verschmutzter Kupferdraht 2a gereinigt und als gereinigter Kupferdraht 2b einer erneuten Verwendung als Zwischenelektrode bei der zweiten Elektrodenrolle der Rollnahtschweissmaschine zugeführt wird.

Dabei wird der verschmutzte Kupferdraht 2a unter Zugspannung in Drahtlängsrichtung an den in Drahtlängsrichtung mit einem Abstand hintereinander angeordneten Abstreifkörpern 4 der Vorrichtung 1 aus Fig. 1 entlang geführt wird, so dass die jeweils zwischen zwei aufeinander folgenden Abstreifkörper 4 liegenden Drahtabschnitte 5a-5g (siehe auch Fig. 1) zusammen einen bogenförmigen Drahtabschnitt bilden, der die Form eines bogenförmigen Polygonzuges aufweist.

Die dabei abgestreiften Verunreinigungen 14 werden mittels einer Vakuumpumpe 12 über den Innenraum 6 des Trägerkörpers 3 abgesaugt und in einem Zyklon 11 abgeschieden, bevor die abgesaugte Luft über einen Filter 13 wieder in die Umgebung abgegeben wird.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zur Reinigung der Oberfläche eines Metalldrahtes (2) oder Metallbandes, insbesondere eines als Zwischenelektrode einer Rollnahtschweissmaschine verwendeten Metalldrahtes (2) oder Metallbandes, **dadurch gekennzeichnet, dass** der Metalldraht (2) oder das Metallband unter Zugspannung in Draht- bzw. Bandlängsrichtung an mehreren in Draht- bzw. Bandlängsrichtung mit einem Abstand hintereinander angeordneten Abstreifkörpern (4) entlanggeführt wird, derart, dass die jeweils zwischen zwei aufeinander folgenden Abstreifkörper (4) liegenden Draht- oder Bandabschnitte (5a-5g) zusammen einen bogenförmigen Drahtabschnitt bilden.

2. Verfahren nach Anspruch 1, wobei der von den jeweils zwischen zwei aufeinander folgenden Abstreifkörper (4) liegenden Draht- oder Bandabschnitten (5a-5g) gebildete bogenförmige Drahtabschnitt die Form eines bogenförmigen Polygonzuges aufweist.

3. Verfahren nach einem der vorangehenden Ansprüche, wobei die Abstreifkörper (4) frei zugänglich an einer Aussenseite eines gemeinsamen Trägerkörpers (3) bereitgestellt werden, derart, dass der Metalldraht (2) oder das Metallband, insbesondere werkzeuglos, auf die Abstreifkörper (4) aufgelegt werden kann.

4. Verfahren nach Anspruch 3, wobei der Trägerkörper (3) einen Innenraum (6) aufweist und die Abstände zwischen den Abstreifkörpern (4) Durchtritte (7) bilden, über welche der Innenraum (6) mit der Umgebung des Trägerkörpers (3) verbunden ist, und wobei während dem Entlangführen des Metalldrahtes (2) oder Metallbandes an den Abstreifkörpern (4) zwecks Reinigung der Oberfläche des Metalldrahtes (2) oder Metallbandes der Innenraum (6) mit Unterdruck beaufschlagt wird, zum Absaugen der an den Abstreifkörpern (4) abgestreiften Verunreinigungen über den Innenraum (6) des Trägerkörpers (3).

5. Verfahren nach Anspruch 4, wobei die Durchtritte (7) in Draht- bzw. Bandlängsrichtung gesehen eine Breite aufweisen, welche mindestens der doppelten Breite des Metalldrahtes (2) oder Metallbandes entsprechen.

6. Verfahren nach einem der vorangehenden Ansprüche, wobei in Draht- bzw. Bandlängsrichtung gesehen vor und nach den mit einem Abstand hintereinander angeordneten Abstreifkörpern (4) Führungselemente (8) angeordnet sind, insbesondere Führungsstifte (8), mittels welchen der Metalldraht (2) oder das Metallband quer zu seiner Auflagerichtung auf den Abstreifkörpern (4) derartig geführt wird, dass der Metalldraht (2) oder das Metallband über die Abstreifkörper (4) geführt wird ohne seitlich anzulaufen.

7. Verfahren nach einem der Ansprüche 3 bis 5 und nach Anspruch 6, wobei die Führungselemente (8) im Trägerkörper (3) bereitgestellt werden.

8. Verfahren nach einem der vorhergehenden Ansprüche, wobei die Abstreifkörper (4) derartig ausgebildet sind und der Metalldraht (2) oder das Metallband derartig an den Abstreifkörpern (4) vorbeigeführt wird, dass der Metalldraht (2) oder das Metallband bei jedem Abstreifkörper (4) zuerst eine Abstreifkante (9) passiert, zum Abstreifen von Verunreinigungen von seiner Oberfläche, und sodann entlang einer Kontaktfläche (10) des Abstreifkörpers (4) geführt wird, zum Kühlen des Metalldrahtes (2) oder Metallbandes mit dem Abstreifkörper (4) .

9. Verfahren nach einem der vorangehenden Ansprüche, wobei keramische Abstreifkörper verwendet werden oder Abstreifkörper (4) aus Hartmetall.

10. Verfahren nach einem der vorangehenden Ansprüche, wobei der Metalldraht (2) oder das Metallband aus Kupfer oder einer Kupferlegierung besteht.

11. Verfahren nach einem der vorangehenden Ansprüche, wobei ein im Wesentlichen runder Metalldraht Flachprofiliert wird, so dass er im Querschnitt gesehen zwei parallele flache Seiten aufweist, und direkt nach dem Flachprofilieren zuerst mit einer ersten der beiden flachen Seiten unter Zugspannung in Draht- bzw. Bandlängsrichtung an mehreren ersten in Draht- bzw. Bandlängsrichtung mit einem Abstand hintereinander angeordneten Abstreifkörpern entlanggeführt wird, derart, dass die jeweils zwischen zwei aufeinander folgenden ersten Abstreifkörper liegenden Draht- oder Bandabschnitte zusammen einen bogenförmigen Drahtabschnitt, insbesondere mit der Form eines bogenförmigen Polygonzuges, bilden, und direkt danach mit der anderen der beiden flachen Seiten unter Zugspannung in Draht- bzw. Bandlängsrichtung an mehreren zweiten in Draht- bzw. Bandlängsrichtung mit einem Abstand hintereinander angeordneten Abstreifkörpern entlanggeführt wird, derart, dass die jeweils zwischen zwei aufeinander folgenden zweiten Abstreifkörper liegenden Draht- oder Bandabschnitte zusammen einen bogenförmigen Drahtabschnitt, insbesondere mit der Form eines bogenförmigen Polygonzuges, bilden.

12. Vorrichtung (1) zur Reinigung der Oberfläche eines Metalldrahtes (2) oder Metallbandes, insbesondere eines als Zwischenelektrode einer Rollnahtschweissmaschine verwendeten Metalldrahtes (2) oder Metallbandes, insbesondere gemäss dem Verfahren nach einem der vorangehenden Ansprüche, umfassend einen Trägerkörper (3) mit mehreren Abstreifkörpern (4), **dadurch gekennzeichnet, dass** die mehreren Abstreifkörper (4) mit einem Abstand hintereinander angeordnet sind derart, dass ein zu reinigender Metalldraht (2) oder ein zu reinigendes Metallband unter Zugspannung in Draht- bzw. Bandlängsrichtung an den Abstreifkörpern (4) entlanggeführt werden kann und die jeweils zwischen zwei aufeinander folgenden Abstreifkörpern liegenden Draht- oder Bandabschnitte (5a-5g) dabei zusammen einen bogenförmigen Drahtabschnitt bilden.

13. Vorrichtung (1) nach Anspruch 12, wobei die Abstreifkörper (4) derartig mit einem Abstand hintereinander angeordnet sind, dass ein zu reinigender Metalldraht (2) oder ein zu reinigendes Metallband unter Zugspannung in Draht- bzw. Bandlängsrichtung an den Abstreifkörpern (4) entlanggeführt werden kann und dabei der von den jeweils zwischen zwei aufeinander folgenden Abstreifkörper liegenden Draht- oder Bandabschnitten (5a-5g) gebildete bogenförmige Drahtabschnitt die Form eines bogenförmigen Polygonzuges aufweist.

14. Vorrichtung (1) nach einem der Ansprüche 12 bis 13, wobei die Abstreifkörper (4) frei zugänglich an einer Aussenseite des Trägerkörpers (3) bereitgestellt sind, derart, dass der zu reinigende Metalldraht (2) oder das zu reinigende Metallband, insbesondere werkzeuglos, auf die Abstreifkörper (4) aufgelegt werden kann.

15. Vorrichtung (1) nach Anspruch 14, wobei der Trägerkörper (3) einen Innenraum (6) aufweist und die Abstände zwischen den Abstreifkörpern (4) Durchtritte (7) bilden, über welche der Innenraum (6) mit der Umgebung des Trägerkörpers (3) verbunden ist, und wobei während einem Entlangführen des Metalldrahtes (2) oder Metallbandes an den Abstreifkörpern (4) zwecks Reinigung der Oberfläche des Metalldrahtes (2) oder Metallbandes der Innenraum (6) mit Unterdruck beaufschlagbar ist, zum Absaugen der an den Abstreifkörpern (4) abgestreiften Verunreinigungen (14) über den Innenraum (6) des Trägerkörpers (3).

16. Vorrichtung (1) nach einem der Ansprüche 12 bis 15, wobei in Draht- bzw. Bandlängsrichtung gesehen vor und nach den mit einem Abstand hintereinander angeordneten Abstreifkörpern (4) Führungselemente (8) angeordnet sind, insbesondere Führungsstifte (8), mittels welchen der Metalldraht (2) oder das Metallband quer zu seiner Auflagerichtung auf den Abstreifkörpern (4) geführt werden kann, insbesondere derartig, dass der Metalldraht (2) oder das Metallband über die Abstreifkörper (4) geführt wird ohne seitlich anzulaufen.

17. Vorrichtung (1) nach einem der Ansprüche 14 bis 15 und nach Anspruch 16, wobei die Führungselemente (8) im Trägerkörper (3) bereitgestellt sind.

18. Vorrichtung (1) nach einem der Ansprüche 12 bis 17, wobei die Abstreifkörper (4) derartig ausgebildet sind und der Metalldraht (2) oder das Metallband derartig an den Abstreifkörpern (4) vorbeigeführt werden kann, dass der Metalldraht (2) oder das Metallband bei jedem Abstreifkörper (4) zuerst eine Abstreifkante (9) passiert, zum Abstreifen von Verunreinigungen (14) von seiner Oberfläche, und sodann entlang einer Kontaktfläche (10) des Abstreifkörpers (4) geführt wird, zum Kühlen des Metalldrahtes (2) oder Metallbandes mit dem Abstreifkörper (4).

19. Vorrichtung (1) nach einem der Ansprüche 12 bis 18, wobei die Abstreifkörper (4) aus Hartmetall oder Keramik sind.

20. Verwendung der Vorrichtung (1) nach einem der Ansprüche 12 bis 19 zum Reinigen eines Metalldrahts (2) oder eines Metallbands aus Kupfer oder einer Kupferlegierung.

## Claims

1. A method for cleaning the surface of a metal wire (2) or a metal strip, in particular of a metal wire (2) or a metal strip used as an intermediate electrode of a roll seam welding machine, wherein the metal wire (2) or the metal strip is guided under tensile stress in the longitudinal direction of the wire or the strip along a plurality of wiping bodies (4) arranged at a distance one behind the other in the longitudinal direction of the wire or the strip, in such a way that the wire or the strip sections (5a, 5b, 5c, 5d, 5d) each lying between two successive wiping bodies (4) together form a bow-shaped wire section.

2. The method according to claim 1, wherein the bow-shaped wire section formed by the wire or the strip sections (5a-5g) each lying between two successive wiping bodies (4) is in the form of a bow-shaped polygonal line.

3. The method according to one of the preceding claims, wherein the wiping bodies (4) are provided freely accessible on an outer side of a common carrier body (3) in such a way that the metal wire (2) or the metal strip can be placed on the wiping bodies (4), in particular without tools.

4. The method according to claim 3, wherein the carrier body (3) has an interior space (6) and wherein the distances between the wiping bodies (4) form passages (7) via which the interior space (6) is connected to the surroundings of the carrier body (3), and wherein, while the metal wire (2) or the metal strip is guided along the wiping bodies (4) for the purpose of cleaning the surface of the metal wire (2) or the metal strip, the interior space (6) is pressurized with negative pressure for the purpose of extracting the contaminants stripped off at the wiping bodies (4) via the interior space (6) of the carrier body (3).

5. The method according to claim 4, wherein the passages (7), as viewed in the longitudinal direction of the wire or the strip, have a width which corresponds to at least twice the width of the metal wire (2) or the metal strip.

6. The method according to one of the preceding claims, wherein, as viewed in the longitudinal direction of the wire or the strip, guide elements (8), in particular guide pins (8), are arranged before and after the wiping bodies (4) arranged at a distance one behind the other, by means of which the metal wire (2) or the metal strip is guided transversely to its bearing direction on the wiping bodies (4) in such a way that the metal wire (2) or the metal strip is guided over the wiping bodies (4) without running up in a lateral direction.

7. The method according to one of the claims 3 to 5 and according to claim 6, wherein the guide elements (8) are provided in the carrier body (3).

8. The method according to one of the preceding claims, wherein the wiping bodies (4) are formed in such a way and wherein the metal wire (2) or the metal strip is guided along the wiping bodies (4) in such a way that the metal wire (2) or the metal strip first passes a wiping edge (9) at each wiping body (4), for stripping contaminants from its surface, and then is guided along a contact surface (10) of the wiping body (4) for cooling the metal wire (2) or the metal strip by means of the wiping body (4).

9. The method according to one of the preceding claims, wherein ceramic wiping bodies are used or wiping bodies (4) made of hard metal.

10. The method according to one of the preceding claims, wherein the metal wire (2) or the metal strip is made of copper or a copper alloy.

11. The method according to one of the preceding claims, wherein a substantially round metal wire is flat-profiled such that, as viewed in cross-section, it has two parallel flat sides, and directly after flat-profiling, first with a first of the two flat sides is guided under tensile stress in the longitudinal direction of the wire or the strip along a plurality of first wiping bodies arranged at a distance one behind the other in the longitudinal direction of the wire or the strip in such a way that the wire or the strip sections each lying between two successive first wiping bodies together form a bow-shaped wire section, in particular with the shape of a bow-shaped polygonal line, and directly thereafter with the other of the two flat sides is guided under tensile stress in the longitudinal direction of the wire or the strip along a plurality of second wiping bodies arranged at a distance one behind the other in the longitudinal direction of the wire or the strip in such a way that the wire or the strip sections each lying between two successive second wiping bodies together form a bow-shaped wire section, in particular with the shape of a bow-shaped polygonal line.

12. A device (1) for cleaning the surface of a metal wire (2) or a metal strip, in particular of a metal wire (2) or a metal strip used as an intermediate electrode of a roll seam welding machine, in particular according to the method according to one of the preceding claims, comprising a carrier body (3) with a plurality of wiping bodies (4), which are arranged one behind the other at a distance such that a metal wire (2) to be cleaned or a metal strip to be cleaned can be guided under tensile stress in the longitudinal direction of the wire or the strip along the wiping bodies (4) and the wire or the strip sections (5a-5g) each lying between two successive wiping bodies thereby together form a bow-shaped strip or wire section (5a-5g).

13. The device (1) according to claim 12, wherein the wiping bodies (4) are arranged one behind the other with a distance such that a metal wire (2) to be cleaned or a metal strip to be cleaned can be guided along the wiping bodies (4) under tensile stress in the longitudinal direction of the wire or the strip, and thereby the bow-shaped wire section formed by the wire or the strip sections (5a-5g) each lying between two successive wiping bodies has the shape of a bow-shaped polygon line.

14. The device (1) according to one of the claims 12 to 13, wherein the wiping bodies (4) are provided freely accessible on an outer side of the carrier body (3) in such a way that the metal wire (2) to be cleaned or the metal strip to be cleaned can be placed on the wiping bodies (4), in particular without tools.

15. The device (1) according to claim 14, wherein the carrier body (3) has an interior space (6) and wherein the distances between the wiping bodies (4) form passages (7) via which the interior space (6) is connected to the surroundings of the carrier body (3), and wherein, while the metal wire (2) or metal strip is guided along the wiping bodies (4) for the purpose of cleaning the surface of the metal wire (2) or the metal strip, the interior space (6) can be pressurized with negative pressure for extracting the contaminants (14) stripped off at the wiping bodies (4) via the interior space (6) of the carrier body (3).

16. The device (1) according to one of the claims 12 to 15, wherein guide elements (8), in particular guide pins (8), are arranged before and after the wiping bodies (4) arranged at a distance one behind the other, as seen in the longitudinal direction of the wire or the strip, by means of which the metal wire (2) or the metal strip can be guided transversely to its bearing direction on the wiping bodies (4), in particular in such a way that the metal wire (2) or the metal strip is guided over the wiping bodies (4) without running up in a lateral direction.

17. The device (1) according to one of the claims 14 to 15 and according to claim 16, wherein the guide elements (8) are provided in the carrier body (3).

18. The device (1) according to one of the claims 12 to 17, wherein the wiping bodies (4) are formed in such a way and wherein the metal wire (2) or the metal strip can be guided along the wiping bodies (4) in such a way that the metal wire (2) or the metal strip first passes a wiping edge (9) at each wiping body (4), for stripping contaminants (14) from its surface, and then is guided along a contact surface (10) of the wiping body (4) for cooling the metal wire (2) or the metal strip by means of the wiping body (4).

19. The device (1) according to one of the claims 12 to 18, wherein the wiping bodies (4) are made of hard metal or ceramic.

20. A use of the device (1) according to one of the claims 12 to 19 for cleaning a metal wire (2) or a metal strip made of copper or a copper alloy.

## Revendications

1. Procédé pour nettoyer la surface d'un fil métallique (2) ou d'une bande métallique, en particulier d'un fil métallique (2) ou d'une bande métallique utilisé(e) comme électrode intermédiaire d'une machine à souder par rouleaux, **caractérisé en ce que** le fil métallique (2) ou la bande métallique est guidé(e) sous tension dans le sens longitudinal du fil ou de la bande le long de plusieurs corps de raclage (4) disposés à distance les uns derrière les autres dans le sens longitudinal du fil ou de bande, de telle sorte que les sections de fil ou de bande (5a-5g) situées entre deux corps de raclage successifs (4) forment ensemble une section de fil en forme d'arc.

2. Procédé selon la revendication 1, dans lequel la section de fil métallique en forme d'arc formée par les sections de fil métallique ou de bande (5a-5g) situées respectivement entre deux corps de raclage successifs (4) présente la forme d'un polygone en arc.

3. Procédé selon l'une des revendications précédentes, dans lequel les corps de raclage (4) sont disposés de manière librement accessible sur un côté extérieur d'un corps de support commun (3), de telle sorte que le fil métallique (2) ou la bande métallique puisse être posé(e) sur les corps de raclage (4), en particulier sans outil.

4. Procédé selon la revendication 3, dans lequel le corps de support (3) présente un espace intérieur (6) et les distances entre les corps de raclage (4) forment des passages (7) par lesquels l'espace intérieur (6) est relié à l'environnement du corps de support (3), et dans lequel, pendant le guidage du fil métallique (2) ou de la bande métallique le long des corps de raclage (4) afin de nettoyer la surface du fil métallique (2) ou de la bande métallique, l'espace intérieur (6) est soumis à une dépression afin d'aspirer les impuretés raclées sur les corps de raclage (4) à travers l'espace intérieur (6) du corps de support (3).

5. Procédé selon la revendication 4, dans lequel les passages (7) présentent, vu dans le sens longitudinal du fil ou de la bande, une largeur qui correspond au moins au double de la largeur du fil métallique (2) ou de la bande métallique.

6. Procédé selon l'une des revendications précédentes, dans lequel, vu dans le sens longitudinal du fil ou de la bande, des éléments de guidage (8), en particulier des goupilles de guidage (8), sont disposés avant et après les corps de raclage (4) disposés à distance les uns derrière les autres, au moyen desquels le fil métallique (2) ou la bande métallique est guidé(e) transversalement à sa direction d'appui sur les corps de raclage (4) de telle sorte que le fil métallique (2) ou la bande métallique soit guidé(e) sur les corps de raclage (4) sans dévier latéralement.

7. Procédé selon l'une des revendications 3 à 5 et selon la revendication 6, dans lequel les éléments de guidage (8) sont prévus dans le corps de support (3).

8. Procédé selon l'une des revendications précédentes, dans lequel les corps de raclage (4) sont conçus de telle sorte et le fil métallique (2) ou la bande métallique est guidé de telle sorte sur les corps de raclage (4) que le fil métallique (2) ou la bande métallique passe d'abord devant un bord de raclage (9) au niveau de chaque corps de raclage (4) afin d'en racler les impuretés de sa surface, puis est guidé le long d'une surface de contact (10) du corps de raclage (4) afin de refroidir le fil métallique (2) ou la bande métallique avec le corps de raclage (4).

9. Procédé selon l'une des revendications précédentes, dans lequel des corps de raclage en céramique ou des corps de raclage (4) en métal dur sont utilisés.

10. Procédé selon l'une des revendications précédentes, dans lequel le fil métallique (2) ou la bande métallique est en cuivre ou en alliage de cuivre.

11. Procédé selon l'une des revendications précédentes, dans lequel un fil métallique essentiellement rond est profilé à plat de manière à présenter, vu en coupe transversale, deux côtés plats parallèles, et immédiatement après le profilage à plat, il est d'abord guidé avec une première des deux faces plates sous tension dans le sens longitudinal du fil ou de la bande le long de plusieurs premiers éléments de raclage disposés à distance les uns derrière les autres dans le sens longitudinal du fil ou de bande, de telle sorte que les sections de fil ou de bande situées entre deux premiers corps de raclage successifs forment ensemble une section de fil en forme d'arc, en particulier en forme de polygone courbe, et immédiatement après, l'autre des deux côtés plats est guidé sous tension de traction dans le sens longitudinal du fil ou dans le sens longitudinal de la bande, le long de plusieurs seconds éléments de raclage disposés à distance les uns derrière les autres dans le sens longitudinal du fil ou de la bande, de telle sorte que les sections de fil ou de bande situées entre deux seconds éléments de raclage successifs forment ensemble une section de fil en forme d'arc, en particulier en forme de polygone courbe.

12. Dispositif (1) pour nettoyer la surface d'un fil métallique (2) ou d'une bande métallique, en particulier d'un fil métallique (2) ou d'une bande métallique utilisé(e) comme électrode intermédiaire d'une machine à souder par rouleaux, en particulier selon le procédé selon l'une des revendications précédentes, comprenant un corps de support (3) avec plusieurs corps de raclage (4), **caractérisé en ce que** plusieurs corps de raclage (4) sont disposés à distance les uns derrière les autres de telle sorte qu'un fil métallique (2) ou une bande métallique à nettoyer puisse être guidé sous tension dans le sens longitudinal du fil ou de la bande le long des éléments de raclage (4) et que les sections de fil ou de bande (5a-5g) situées entre deux éléments de raclage successifs forment ensemble une section de fil en forme d'arc.

13. Dispositif (1) selon la revendication 12, dans lequel les corps de raclage (4) sont disposés les uns derrière les autres à une distance telle qu'un fil métallique (2) à nettoyer ou une bande métallique à nettoyer puisse être guidé sous tension dans le sens longitudinal du fil ou de la bande le long des corps de raclage (4), dans lequel la section de fil en forme d'arc formée par les sections de fil ou de bande (5a-5g) situées respectivement entre deux corps de raclage consécutifs présente la forme d'un polygone en arc.

14. Dispositif (1) selon l'une des revendications 12 à 13, dans lequel les corps de raclage (4) sont disposés de manière librement accessible sur un côté extérieur du corps de support (3), de telle sorte que le fil métallique (2) ou la bande métallique à nettoyer puisse être posé(e) sur les corps de raclage (4), en particulier sans outil.

15. Dispositif (1) selon la revendication 14, dans lequel le corps de support (3) présente un espace intérieur (6) et les distances entre les corps de raclage (4) forment des passages (7) par lesquels l'espace intérieur (6) est relié à l'environnement du corps de support (3), et dans lequel, pendant le guidage du fil métallique (2) ou de la bande métallique le long des corps de raclage (4) afin de nettoyer la surface du fil métallique (2) ou de la bande métallique, l'espace intérieur (6) peut être soumis à une dépression afin d'aspirer les impuretés (14) raclées sur les corps de raclage (4) via l'espace intérieur (6) du corps de support (3).

16. Dispositif (1) selon l'une des revendications 12 à 15, dans lequel, vu dans le sens longitudinal du fil ou de la bande, des éléments de guidage (8), en particulier des goupilles de guidage (8), sont disposés avant et après les corps de raclage (4) disposés à distance les uns derrière les autres, au moyen desquels le fil métallique (2) ou la bande métallique peut être guidé transversalement à sa direction d'appui sur les corps de raclage (4), en particulier de telle sorte que le fil métallique (2) ou la bande métallique soit guidé sur les corps de raclage (4) sans dévier latéralement.

17. Dispositif (1) selon l'une des revendications 14 à 15 et selon la revendication 16, dans lequel les éléments de guidage (8) sont prévus dans le corps de support (3).

18. Dispositif (1) selon l'une des revendications 12 à 17, dans lequel les corps de raclage (4) sont conçus de telle sorte et le fil métallique (2) ou la bande métallique peuvent être guidés de telle sorte sur les corps de raclage (4) que le fil métallique (2) ou la bande métallique passe d'abord devant un bord de raclage (9) au niveau de chaque corps de raclage (4) afin de racler les impuretés (14) de sa surface, puis est guidé le long d'une surface de contact (10) du corps de raclage (4) afin de refroidir le fil métallique (2) ou la bande métallique avec le corps de raclage (4).

19. Dispositif (1) selon l'une des revendications 12 à 18, dans lequel les éléments de raclage (4) sont en métal dur ou en céramique.

20. Utilisation du dispositif (1) selon l'une des revendications 12 à 19 pour nettoyer un fil métallique (2) ou une bande métallique en cuivre ou en alliage de cuivre.
